# EUROPÄISCHE PATENTSCHRIFT

(11) **EP 2 188 197 B1**
(45) Veröffentlichungstag und Bekanntmachung des Hinweises auf die Patenterteilung: **10.08.2011**
(21) Anmeldenummer: 08801906.2
(22) Anmeldetag: 08.09.2008
(51) Int. Cl.: B65G 23/44, E21C 29/14, E21F 13/06

(54) **GEWINNUNGSANLAGE INSBESONDERE FÜR DEN BERGBAU UND VERFAHREN ZUM ANSTEUERN DER GEWINNUNGSANLAGE**
EXTRACTION DEVICE, PARTICULARLY FOR MINING, AND METHOD FOR CONTROLLING THE EXTRACTION DEVICE
INSTALLATION D'EXTRACTION, EN PARTICULIER POUR LA MINE, ET PROCÉDÉ DE COMMANDE DE L'INSTALLATION D'EXTRACTION

(30) Priorität: 11.09.2007 DE 102007043043
(43) Veröffentlichungstag der Anmeldung: 26.05.2010
(73) Patentinhaber: Bucyrus Europe GmbH, 44534 Lünen (DE)
(72) Erfinder: MERTEN, Gerhard, 44534 Lünen (DE); WIRTZ, Jörg, 58454 Witten (DE); SCHÜRER, Karl-Heinz, 44623 Herne (DE); BÖKER, Uwe, 71404 Korb (DE); BÄUMLER, Manfred, 70736 Fellbach (DE)
(74) Vertreter: Althaus, Arndt
(86) Internationale Anmeldenummer: PCT/EP2008/007327
(87) Internationale Veröffentlichungsnummer: WO 2009/033622

(56) Entgegenhaltungen:
- DE-A1- 2 017 949
- DE-A1- 3 406 519
- DE-A1- 3 926 957

## Beschreibung

Die Erfindung betrifft eine Gewinnungsanlage insbesondere für den Bergbau, mit einer ersten Antriebsstation und mit einer zweiten, vorzugsweise mittels einer Spanneinrichtung spannbaren Antriebsstation, mit in den Antriebsstationen gelagerten Kettenrädern, mit einer Kettenglieder aufweisenden und mittels der motorisch antreibbaren Kettenräder bewegbaren und/oder umlenkbaren Antriebskette, die zwischen den Kettenrädern in einem Obertrum und einem Untertrum verläuft, und wenigstens einer Sensoreinrichtung zur Erfassung zumindest eines Kettenzustandes der Antriebskette im Obertrum oder im Untertrum. Die Erfindung betrifft auch ein Verfahren zum Ansteuern einer Gewinnungsanlage insbesondere für den Bergbau, mit einer ersten Antriebsstation und mit einer zweiten, vorzugsweise mittels einer Spanneinrichtung spannbaren Antriebsstation, mit in den Antriebsstationen gelagerten Kettenrädern, mit einer Kettenglieder aufweisenden und mittels der motorisch angetriebenen Kettenräder bewegbaren Antriebskette, die zwischen den Kettenrädern in einem Obertrum und einem Untertrum verläuft, mit wenigstens einer Sensoreinrichtung zur Erfassung zumindest eines Kettenzustandes der Antriebskette im Obertrum oder im Untertrum, und mit einer Steuereinrichtung, der die Signale der Sensoreinrichtung zugeführt werden und mit welcher der Ausfahrzustand der Spanneinrichtung und/oder die Antriebe der Antriebsstationen ansteuerbar sind.

Für die Betriebsweise einer Gewinnungsanlage mit einer umlaufenden oder einer reversierend arbeitenden Antriebskette ist es von enormer Bedeutung, den Kettenzustand der Antriebskette und insbesondere die Kettenvorspannung mit geeigneten Maßnahmen abzuschätzen oder zu überprüfen. Grundsätzlich wurden hierzu bereits optische, elektrische, magnetische sowie mechanische Sensoreinrichtungen vorgeschlagen, welche Messwerte liefern sollen, aus denen der Kettenspannungszustand abgeleitet und aufgrund geeigneter Algorithmen Ansteuerparameter für die Spanneinrichtung oder aber auch für die Antriebsmotoren der Antriebseinrichtungen abgeleitet werden sollen.

In der DE 34 06 519 A1 wird vorgeschlagen, eine magnetisch arbeitende Sensoreinrichtung einzusetzen, um bei spannbaren Antriebsstationen die Kettenspannung magnetisch zu erfassen. In der DE 34 06 519 wird hierzu ein Magnetfeld-Erzeuger vorgeschlagen, der in Kettenlaufrichtung jeweils dem aus der Antriebsstation auslaufenden Trum zugeordnet wird. Der zur Messung der Kettenspannung im Obertrum vorgesehene Magnetfeld-Erzeuger wird im Bodenblech angeordnet und der zur Messung der Kettenspannung im Untertrum vorgesehenen Magnetfeld-Erzeuger wird im Bodenblech der Antriebsstation oberhalb des Untertrums angeordnet, um eine Verstimmung des Magnetfeldes, die sich aufgrund einer Abstandsänderung zwischen der zu messenden Antriebskette und den Kettengliedern ergibt, zu erfassen. Neben der Hängekette soll auch der Abstand von Kratzern einer Fördererkette oder auch eine Änderung der Kettengliedabstände in Kombination mit einer Hängekettenregelung verwirklicht werden. Das Messprinzip bei der DE 34 06 519 beruht darauf, ein gerichtetes Magnetfeld zu erzeugen, dass durch unterschiedlich tief in das Magnetfeld eintauchende Kettenglieder verstimmt wird, wobei die Verstimmung des abgetasteten Magnetfeldes messtechnisch ausgewertet werden soll. Da der magnetische Messgeber einschließlich der Messeinrichtung im Bodenblech des auslaufenden Trums angeordnet wird, tritt ein hoher Verschleiß auf, der nur geringe Standzeiten eines derartigen magnetischen Messsystems zulässt. Die technische Umsetzung des aus der DE 34 06 519 A1 bekannten Systems zur Hängekettenerfassung sowie anderer Kettenzustände konnte daher nicht zur Serienreife weiterentwickelt werden.

Aufgabe der Erfindung ist es, eine Gewinnungsanlage sowie ein Verfahren zum Ansteuern einer Gewinnungsanlage zu schaffen, die eine sichere Erfassung des Kettenzustandes der Antriebskette mit einer berührungslos arbeitenden Sensoreinrichtung ermöglichen und bei hoher Systemsicherheit eine deutlich höhere Standzeit aufweisen.

Aus der DE 201 17 949 sind ein Verfahren nebst zugehöriger Vorrichtung zur Verminderung der Antriebsleistung von Kettenkratzförderern bekannt, bei denen mit Einrichtungen, die den Abstand der Kette von ihrer gestreckten Lage messen und die optisch, elektrisch, magnetisch oder mechanisch wirken können, Steuergrößen erfasst werden, um auf Basis dieser Steuergrößen Kettenspannvorrichtungen derart anzusteuern, dass im Ablauftrum eine vorbestimmte Kettenlose weder übernoch unterschritten wird. Ein Messwertgeber spricht hierbei auf die Straffung des Kettentrums, also auf eine Reduzierung des Abstandes, und ein anderer Messwertgeber auf die zunehmende Lockerung, also die Vergrößerung des Abstandes des Kettentrums vom optimalen Verlauf an. Als Messwertgeber wird beispielsweise ein die Antriebsstation quer durchsetzender Strahl beschrieben, der vom Kettenband unterbrochen wird und dann einen entsprechenden Impuls auslöst. Alternativ werden auch induktive oder kapazitive Messvorrichtungen, berührungslos arbeitende Messwertgeber, mechanisch arbeitende Messwertgeber als grundsätzliche Messwertgeber genannt.

Diese sowie weitere Aufgaben werden bei einer Gewinnungsanlage erfindungsgemäß dadurch gelöst, dass jede Sensoreinrichtung einen von einem Magnetfeld-Erzeuger gebildeten Geber und ein mit mehreren Magnetfelddetektoren versehenes Detektorfeld als Detektor aufweist, wobei Detektor und Geber seitlich eines Durchgangs für den abzutastenden Trum der Antriebskette ausgebildet bzw. positioniert sind. Ein systemtechnischer Vorteil bei der erfindungsgemäßen Gewinnungsanlage besteht darin, dass die Sensoreinrichtung nicht eine Verstimmung des Magnetfeldes wegen eines unterschiedlichen Abstandes der Kettenglieder zum Magnetfelderzeuger bzw. Detektor messtechnisch auswertet, sondern eine Lageänderung bzw. Höhenänderung des Mitnehmers oder Kettengliedes quer zur Laufrichtung der Antriebskette abtastet. Bei der erfindungsgemäßen Gewinnungsanlage wird das Magnetfeld in die Antriebskette eingeleitet und für jeden Magnetfelddetektor des Detektorfeldes wird ein Messsignal erfasst. Ändert sich die Position eines Kettengliedes oder eines Mitnehmers innerhalb des Sensorfeldes gegenüber seiner Position beim vorherigen Durchgang oder relativ zu einer definierten Nulllage, kann hieraus abgeleitet werden, ob sich das Kettenglied bzw. der Mitnehmer im Bereich des Detektorfeldes weiter oben oder unten befindet. Wird zugleich auch ein Zeitsignal für jeden Mitnehmer oder jedes Kettenglied erfasst, so kann auch ein unterschiedlicher Abstand von Kettengliedern oder Mitnehmern zueinander detektiert werden, worüber weitere Kettenzustände wie z.B. Kettenverschleiß, Kettenverdrillung oder dgl. ermittelt werden können.

Der als Detektorfeld ausgebildete Detektor und der Geber für das Magnetfeld können an derselben Seite nebeneinander angeordnet werden. Bei einer bevorzugten Ausgestaltung sind Detektor und Geber einander gegenüberliegend angeordnet, so dass mithin der Geber das Magnetfeld auf der einen Seite in die Kettenglieder oder Mitnehmer einleitet und die Magnetfelddetektoren des Detektorfeldes das von den Kettengliedern oder Mitnehmern übertragene Magnetfeld an der anderen Seite des Durchgangs abtasten. Um eine sichere Detektierung insbesondere von Hängeketten zu ermöglichen, ist besonders vorteilhaft, wenn sich das Detektorfeld mit mehreren Detektoren über die Höhe des Durchgangs erstreckt. Bei der insbesondere bevorzugten Ausgestaltung weist das Detektorfeld mehrere nebeneinander angeordnete Magnetfelddetektoren und mehrere übereinander angeordnete Magnetfelddetektoren auf, um in einem ausreichend großen Bereich das vom abzutastenden Kettenglied oder Mitnehmer quer zur Laufrichtung der Antriebskette übertragene bzw. weitergeleitete Magnetwechselfeld zu erfassen. Um den Rechenaufwand zu vereinfachen, können hierbei die Magnetfelddetektoren in Reihen und Spalten mit gleichbleibenden Abständen angeordnet sein. Aufgrund der zweidimensionalen Anordnung der Magnetfelddetektoren im Detektorfeld kann die Messung und Abtastung des übertragenen Magnetfeldes mit Magnetfelddetektoren erfolgen, die ggf. ausschließlich die horizontalen Anteile des übertragenen Magnetfeldes messen und erfassen.

Besonders vorteilhaft ist es, wenn das Detektorfeld und/oder der Erzeuger für das Magnetfeld in den Seitenwangen eines Maschinenrahmens oder den Seitenwänden eines Kettenradkastens der Antriebsstation angeordnet, insbesondere eingebaut sind. In den Seitenwangen oder Seitenwänden unterliegen weder der Detektor noch der Erzeuger für das Magnetfeld einem nennenswerten mechanischen Verschleiß, da selbst bei Hängekette oder Wartungsarbeiten die Kettenglieder oder Mitnehmer nicht in Kontakt mit dem Geber und Detektor kommen. In beiden Seitenwangen bzw. Seitenwänden besteht meist ausreichend Bauraum zur Verfügung, um ein Detektorfeld sowie einen Geber für das Magnetfeld zu integrieren. Um Wechselwirkungen mit der vom Maschinenrahmen gebildeten Umgebungskonstruktion zu verweiden, sind das Detektorfeld und/oder der Geber vorzugsweise in einem Gehäuse oder in einer Trägerkonstruktion aus nichtmagnetischem Werkstoff angeordnet. Der Werkstoff kann insbesondere aus Messing, Bronze, Kupfer, Aluminium, Titan, austenitischem Stahl oder Legierungen hiermit, aus Keramik oder aus Kunststoff bestehen. Der verwendete Werkstoff bzw. die verwendeten Werkstofflegierungen sollten sämtliche Anforderungen an den Explosionsschutz (Schlagwetterschutz, Gasexplosionsschutz) für den jeweiligen Einsatzzweck erfüllen.

Mit den Magnetfelderzeugern kann gemäß einer erfindungsgemäßen Ausführungsvariante ein statisches, zeitlich konstantes Magnetfeld erzeugt werden. Gemäß einer vorteilhaften alternativen Ausgestaltung werden Magnetwechselfeld-Erzeuger als Geber eingesetzt, um ein dynamisches Magnetwechselfeld zu erzeugen. Durch die Verwendung von Magnetwechselfeld-Erzeugern als Geber für die magnetische Sensoreinrichtung wird zur Messung ein moduliertes Magnetfeld verwendet, welches verhindert, dass Fehlmessungen wegen unterschiedlicher magnetischer Vorzugsrichtungen der abzutastenden Kettenglieder oder Mitnehmer auftreten. Untersuchungen der Anmelderin haben gezeigt, dass Kettenglieder und in Antriebsketten von Förderern eingesetzte Mitnehmer (Kettenkratzer) bei Magnetisierung quer zur Laufrichtung der Antriebskette deutlich unterschiedliche magnetische Flussdichten sowie Verstärkungen des von dem magnetischen Erzeuger ausgestrahlten Magnetfeldes zeigen. Bei Verwendung von Magnetwechselfeld-Erzeugern wird die Abhängigkeit von der magnetischen Vorzugsrichtung des abzutastenden Kettengliedes oder Mitnehmers vermieden, da das Magnetwechselfeld mit den Detektoren im Detektorfeld abgetastet wird. Bei der insbesondere bevorzugten Ausgestaltung wird der Geber bzw. Magnetwechselfelderzeuger dabei von einem rotierbaren oder rotierenden Magneten gebildet. Die Rotationsgeschwindigkeit des Magneten kann wenigstens 100 U/min betragen und bis zu 1.000 U/min und mehr betragen. Weiter vorzugsweise kann der Magnet eine Magnetfeldstärke von wenigstens 0,5 T (Tesla) aufweisen. Bei dem rotierbaren oder rotierenden Magneten kann es sich insbesondere um einen Permanentmagneten handeln. Der Geber kann hierbei einen oder auch mehrere rotierbare bzw. rotierende Magneten erhalten, um auch bei niedriger Drehzahl eine hohe Wechselfrequenz des Magnetwechselfeldes zu erreichen. Die mehreren Dauermagneten können insbesondere in einem rotierbaren Träger aus nichtmagnetischem Material angeordnet werden. Um dem Explosionsschutz zu genügen, weist der Geber für das Magnetwechselfeld vorzugsweise einen hydraulischen Drehantrieb, insbesondere einen Hydraulikmotor mit Stromregelventil zur Drehzahlverstellung, auf. Das Hydraulikmedium kann aus der zentralen, untertägigen Hydraulikversorgung für die Ausbauschilde oder Rückeinrichtungen abgezweigt und im Druckniveau mittels einer Druckregelstufe auf einen zulässigen Druck für den Hydraulikmotor gemindert werden. Das An- und Abschalten kann dann über vorgesteuerte Mehrwegeventile erfolgen. Besonders vorteilhaft ist, wenn dem Drehantrieb für den Geber ein Drehwinkelsensor zugeordnet ist, um den aktuellen Drehwinkel des Modulators zu erfassen und an die Auswerte- und Steuereinheit zu liefern.

Bei einer weiteren Ausführungsvariante kann der Magnet oder können mehrere Magnete des Gebers eine Magnetanordnung bilden, deren Lage und/oder Ausrichtung relativ zum Magnetfeldsensor veränderbar ist, um ein insbesondere in der Magnetfeldstärke variables Magnetfeld zu erzeugen. Der Geber kann hierzu vorzugsweise eine Magnetanordnung mit mehreren konzentrisch um eine Mittelachse angeordneten Ringmagneten aufweisen, wobei die Ringanordnung mittels eines Stellantriebs um die Mittelachse verdrehbar ist. Besonders vorteilhaft ist dann, wenn die Magnetanordnung in unterschiedlichen Verdrehlagen mittels des Stellantriebs positionierbar ist. Dies kann beispielsweise durch einen selbsthemmenden Stellantrieb mit hoher Untersetzung erreicht werden, der insbesondere aus einem elektrischen Stellantrieb bestehen kann, der in der gewünschten Verdrehlage stromlos geschaltet wird.

Die Gewinnungsanlage kann als Förderer mit Mitnehmern in der Antriebskette ausgebildet sein und jede Antriebsstation weist dann ggf. nur eine Sensoreinrichtung auf, die dem Trum zugeordnet ist, der in Kettenlaufrichtung jeweils hinter dem Kettenrad aus der Antriebsstation ausläuft. Da bei Förderern antriebs- und regeltechnisch meist mit einem Hauptantrieb und einem Hilfsantrieb gearbeitet wird, würde dann eine Sensoreinrichtung im Untertrum des Hauptantriebs und eine zweite Sensoreinrichtung im Obertrum des Hilfsantriebs angeordnet werden. Alternativ kann es sich um eine Gewinnungsanlage wie z.B. eine Hobelanlage mit einer reversierend bewegbaren Antriebskette handeln, wobei dann jede Antriebsstation zwei Sensoreinrichtungen aufweist, von denen in jeder Antriebsstation eine Sensoreinrichtung dem Obertrum und eine Sensoreinrichtung dem Untertrum zugeordnet ist oder zugeordnet wird. Bei reversierend bewegten Antriebsketten müssen die Antriebe der Antriebsstationen je nach Laufrichtung der Gewinnungsmaschine die Hauptarbeit leisten, so dass Hängekette in jeder Antriebsstation sowohl vor als auch hinter dem Kettenrad auftreten kann. Es kann jedoch auch bei Förderern jedem Trum in der Antriebsstation eine Sensoreinrichtung zugeordnet werden.

Weiter vorzugsweise können dem Geber auf derselben Seite des Durchgangs Magnetfeldsensoren zur Erfassung des vom Geber erzeugten realen Magnetfeldes als Referenzgröße zugeordnet sein.

Die vorgenannte Aufgabe wird bei einem erfindungsgemäßen Verfahren dadurch gelöst, dass jede Sensoreinrichtung ein statisches Magnetfeld oder ein dynamisches Magnetwechselfeld erzeugt, das mittels eines von mehreren Magnetfelddetektoren gebildeten Detektorfeldes abgetastet wird, wobei der abzutastende Trum der Antriebskette zwischen dem Magnetfeld-Erzeuger und dem Detektorfeld hindurchgeführt wird und aus einer Veränderung der Lage des im Detektorfeld erfassten Magnetfeldes oder Magnetwechselfeldes der Kettenzustand der Antriebskette ermittelt wird.

Bei dem erfindungsgemäßen Verfahren ist besonders vorteilhaft, wenn jeder Magnetfelddetektor des Detektorfeldes das vom Geber abgegebene und durch die Antriebskette, mithin von den Kettengliedern oder von den Mitnehmern übertragene Magnetfeld oder Magnetwechselfeld abtastet und aus der Position des oder der die maximale Magnetfeldstärke ermittelnden Magnetfelddetektors/en der Kettenzustand, insbesondere die Lage der Kettenglieder oder Mitnehmer, ermittelt wird. Besonders vorteilhaft ist, wenn in der Auswerte- und Steuereinheit die Kennzahlen wie z.B. die Drehzahlen von Antriebsmotoren der Antriebsstationen erfasst werden und in Abhängigkeit von dem ermittelten Kettenzustand eine Drehzahlregelung und/oder eine Änderung des Spannungszustandes der Spanneinrichtung eingeleitet werden. Der mit der magnetischen Sensoreinrichtung ermittelte Kettenzustand kann jedoch auch ohne Drehzahlerfassung zur Ansteuerung der Spanneinrichtung herangezogen werden. Gemäß einer weiteren Ausgestaltung des Verfahrens mit einem ein dynamisches Magnetwechselfeld erzeugenden Geber kann mit dem Geber zugeordneten Magnetfeldsensoren das reale, vom Geber erzeugte Magnetwechselfeld erfasst und als Referenzwert der Auswerteeinheit zugeführt werden und/oder der Drehwinkel eines Drehantriebs für den Geber wird erfasst und als Referenzwert der Auswerteeinheit zugeführt. Mit diesen Referenzwerten kann das gemessene Ergebnis zusätzlich auf Vorhandensein von Fehlmessungen überprüft werden.

Da ein einzelner Mitnehmer oder ein einzelnes Kettenglied, wie Messungen der Erfinder gezeigt haben, nicht nur unterschiedliche magnetische Vorzugsrichtungen aufweisen können, sondern selbst bei identischer Magnetisierung unterschiedliche Veränderungen des eingeleiteten Magnetfeldes oder Magnetwechselfeldes auftreten können, und da außerdem Wechselwirkungen zwischen benachbarten Mitnehmern oder Kettengliedern auftreten können, wird bei der insbesondere bevorzugten Ausgestaltung nach jedem Stillstand der Antriebskette ein Referenz- oder Kalibrierdurchgang eingeleitet, in welchem für jedes Kettenglied oder für jeden Mitnehmer ein Referenzwert für die Grundmagnetisierung ermittelt wird, der im Betrieb mit dem aktuell mittels des Detektorfeldes detektierten Messwertes verglichen wird, um hieraus eine Änderung des Kettenzustandes wie beispielsweise eine Lageänderung oder einen zunehmenden Verschleiß der einzelnen Kettenglieder oder Mitnehmer zu ermitteln.

Weitere Vorteile und Ausgestaltungen der Erfindung ergeben sich aus der nachfolgenden Beschreibung von schematisch in der Zeichnung gezeigten Ausführungsbeispielen. In der Zeichnung zeigen:
- **Fig. 1**: schematisch vereinfacht eine Prinzipskizze einer als Förderer ausgeführten erfindungsgemäßen Gewinnungsan- lage für den untertägigen Bergbau;
- **Fig. 2**: stark schematisch vereinfacht einen Antriebsrahmen einer Antriebsstation für die Gewinnungsanlage aus Fig. 1 mit eingebauter Sensoreinrichtung;
- **Fig. 3 A-C**: schematisch stark vereinfacht in einem Systembild die Lageerkennung bei der erfindungsgemäßen magnetischen Sensoreinrichtung;

- **Fig. 4**: in einem schematischen Schaubild ähnlich zu Fig. 1 eine als Hobelanlage ausgeführte Gewinnungsanlage mit erfindungsgemäßer Sensoreinrichtung;
- **Fig. 5 A-C**: die Erfassung unterschiedlicher Kettenlagen bei der Hobelanlage nach Fig. 4;
- **Fig. 6**: schematisch stark vereinfacht in perspektivischer An- sicht ein Ausführungsbeispiel für einen Magnetwech- selfelderzeuger;
- **Fig. 7**: schematisch stark vereinfacht in perspektivischer An- sicht ein Ausführungsbeispiel für einen Magnetfelder- zeuger mit variablem Magnetfeld, teilweise aufgebro- chen; und
- **Fig. 8**: den Magnetfelderzeuger aus Fig. 7 in Draufsicht.

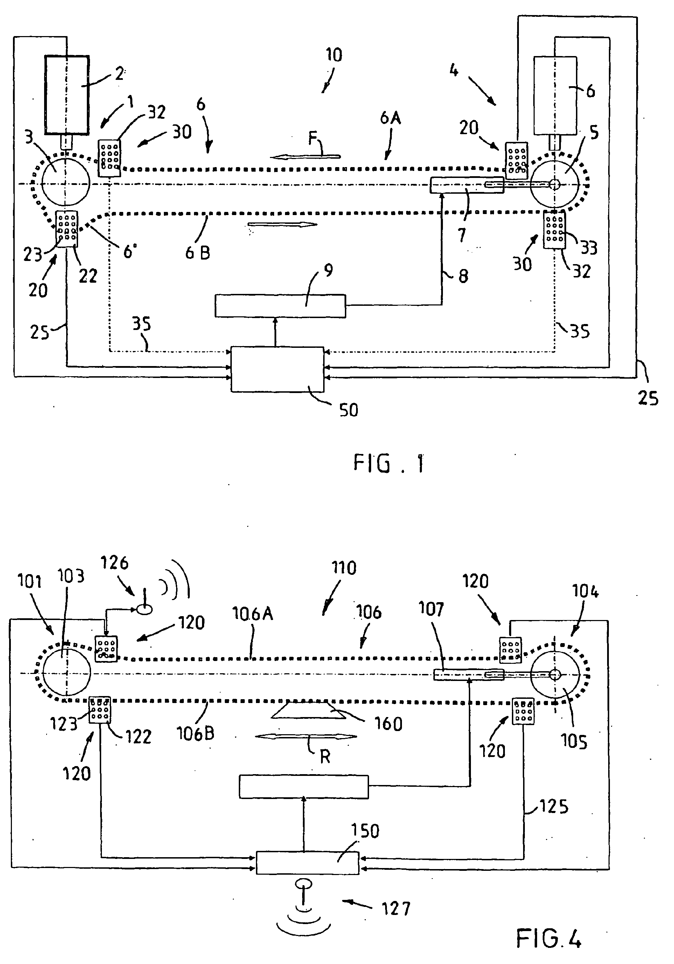

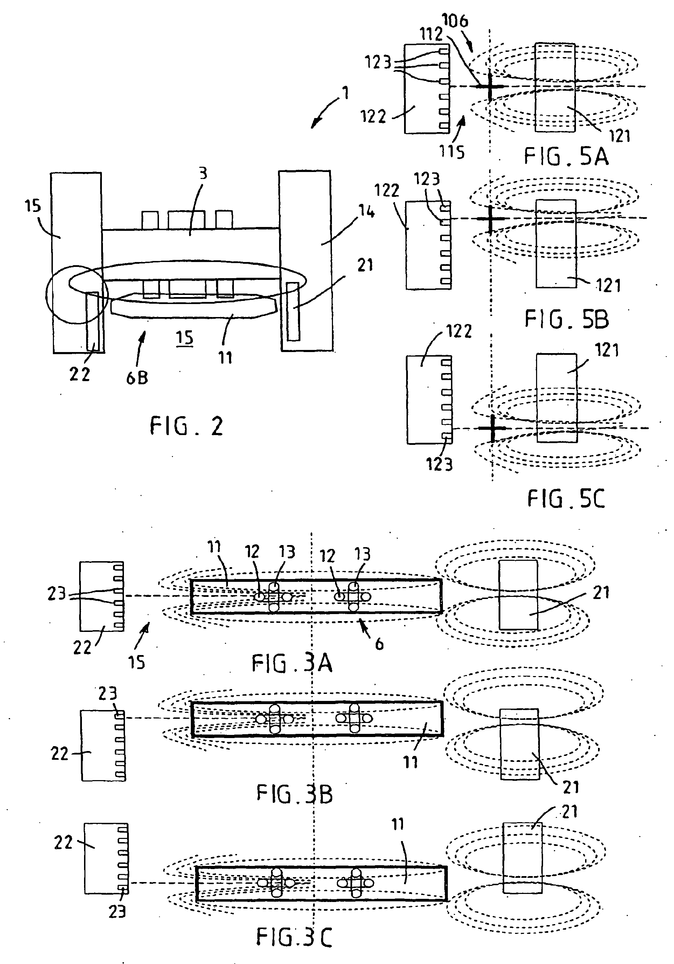

Fig. 1 zeigt in einer schematischen Systemdarstellung eine insgesamt mit Bezugszeichen 10 bezeichnete Förderanlage für den untertägigen Bergbau. Die Förderanlage 10 umfasst in an sich bekannter Weise eine erste Antriebsstation 1 mit einem schematisch dargestellten Antriebsmotor 2 und einem Kettenrad 3 sowie am anderen Ende der Förderanlage 10 eine zweite Antriebsstation 4 mit wiederum einem Kettenrad 5 sowie zugehörigem Antriebsmotor 6. Die Antriebsmotoren 2 und 6 können grundsätzlich jede für den Einsatzzweck geeignete Ausgestaltung aufweisen und als Synchronmotoren, Frequenzumrichtermotoren od.dgl. ausgebildet sein und Getriebe, Regeleinrichtungen, Überlastkupplungen und dgl. umfassen. Zwischen beiden Kettenrädern 3, 5 läuft eine endlose Kratzerkette 6 in der mit dem Pfeil F angedeuteten Förderrichtung um, wobei Material, welches mit geeigneten Gewinnungswerkzeugen in einem untertägigen Streb hereingewonnen wird, in einem Obertrum 6A mittels der in den Fig. 2 und 3A-C schematisch angedeuteten Mitnehmern 11 in Richtung auf die Antriebsstation 1, die hier den Hauptantrieb bildet, transportiert wird. Der Obertrum der an den Kettenrädern 3, 5 umlaufenden Antriebskette ist in Fig. 1 mit 6A und der Rücklauftrum oder Leerlauftrum der Antriebskette 6 mit Bezugszeichen 6B bezeichnet. Bei einem untertätigen Förderer leistet derjenige Antrieb, auf den der Obertrum 6A zuläuft, die größere Antriebsleistung, weswegen vorrangig im Untertrum 6B hinter dem Kettenrad 3 der Antriebsstation 1, aber auch im Untertrum 6A hinter dem Kettenrad 5 der Antriebsstation 4 die Gefahr des Auftretens von Hängekette besteht. Um unterschiedliche Spannungszustände der Antriebskette 6 auszugleichen ist bei der Förderanlage 10 dem Hilfsantrieb, mithin der Antriebsstation 4, eine hydraulische Spanneinrichtung 7 zugeordnet, mit welcher der Abstand zwischen den Kettenrädern 3, 5 der Antriebsstationen 1, 4 verändert werden kann. Das Aus- oder Einfahren der Spanneinrichtung 7 erfolgt in Abhängigkeit von einem mit der Linie 8 angedeuteten Steuersignal einer Hydrauliksteuerung 9.

Bei der Förderanlage 10 kommt, wie Fig. 3A-3C zeigen, eine als Doppelmittelkette ausgeführte Antriebskette 6 mit horizontalen Kettengliedern 12 und vertikalen Kettengliedern 13 zum Einsatz, an denen in bestimmten Abständen Mitnehmer (Kratzer) 11 befestigt sind. Um bei der Fördereranlage gemäß Fig. 1 das Auftreten von Hängekette an der Antriebskette 6 oder das Auftreten von Verschleiß an den Kettengliedern 12, 13 oder den Mitnehmer 11 erkennen zu können, ist beiden Antriebsstationen 1, 4 eine in Fig. 1 mit 20 angedeutete Sensoreinrichtung zugeordnet. Die Sensoreinrichtung 20 ist beim Hauptantrieb, mithin bei der Antriebsstation 1 in Fig. 1, dem Untertrum 6B in Kettenlaufrichtung im Auslauf hinter dem Kettenrad 3 und bei der den Hilfsantrieb bildenden Antriebsstation 4 in Kettenlaufrichtung F im Auslauf des Kettenrades 5 dem Obertrum 6A zugeordnet. Beide Sensoreinrichtungen 20 sind vorzugsweise identisch zueinander aufgebaut und umfassen einen Geber, der beim beschriebenen Ausführungsbeispiel ein Magnetwechselfeld erzeugt und in den Fig. 2 und 3A-3C schematisch mit Bezugszeichen 21 bezeichnet ist, sowie ein Detektorfeld 22 mit einer Mehrzahl neben- und übereinander angeordneter Magnetfelddetektoren 23 als Detektor für das vom Geber 21 ausgesandte Magnetwechselfeld. Der Magnetwechselfeld-Geber 21 ist in einer der beiden Seitenwangen 14 an einer Seite eines Durchgangs 15 für die Mitnehmer 11 sowie die Kettenglieder 12, 13 angeordnet und das Detektorfeld 22 liegt dem Geber 21 in der anderen Seitenwange 15 gegenüber. Da Fig. 2 schematisch die einen Hauptantrieb bildende Antriebsstation 1 zeigt, sind hierbei der magnetische Geber 21 und das Detektorfeld 23 in die Seitenwangen 14, 15 im Bereich des Untertrums 6B der Antriebskette 6 eingebaut, und zwar in einer Position, in der die mit der Ausbuchtung 6' in Fig. 1 angedeutete Hängkette aufgrund einer Änderung der Höhenlage der Mitnehmer 11 relativ zum tangentialen Auslauf aus dem Kettenrad 3 detektiert werden kann. Sowohl der Geber 12 als auch das Detektorfeld 22 können in einem Gehäuse aus nichtmagnetischem Material angeordnet sein. Es könnten jedoch auch die Seitenwangen zumindest partiell aus geeignetem, nichtmagnetischem Material bestehen. Der Magnetwechselfeld-Erzeuger 21 kann vorteilhafterweise aus einem Permanentmagneten oder, falls keine Anforderungen an Explosionsschutz zu erfüllen sind, aus einem Elektromagneten bestehen, der an einem vorzugsweise drehzahlgeregelten Motor angebaut ist und mit Rotationsgeschwindigkeiten von bis zu 1000 U/min rotiert wird, um ein moduliertes bzw. dynamisches Magnetfeld (Magnetwechselfeld) für die Detektion mit dem Detektorfeld 22 zu erzeugen. Bei dem Drehantrieb für den oder die Magneten kann es sich insbesondere um einen Hydraulikmotor (nicht gezeigt) handeln, der aufgrund der Durchströmung mit Hydraulikmedium in Rotation versetzt wird. Das Detektorfeld 22 wiederum umfasst eine Matrix mit einer geeigneten Anzahl über- und nebeneinander angeordneter Magnetfelddetektoren 23, damit mit jedem der einzelnen Magnetfelddetektoren 23 die mit dem Geber 21 auf der einen Seite in die Mitnehmer 11 eingeleitete Magnetisierung und vorübergehende Aufmagnetisierung abgetastet werden kann.

Die Fig. 3A, 3B und 3C verdeutlichen schematisch die Lage eines Mitnehmers 11 in drei unterschiedlichen Lagen relativ zum Detektorfeld 22. In der obersten Darstellung in Fig. 3 ist ein Mitnehmer 11 gezeigt, der den Durchgang 15 zwischen dem Magnetwechselfelderzeuger 21 und dem Detektorfeld 22 mit den matrixartig über- und nebeneinander angeordneten Magnetfelddetektoren 23 in mittlerer Lage, d.h. mit normaler Kettenspannung, passiert. Die einzelnen Detektoren 23 im Detektorfeld 22 detektieren unterschiedliche Magnetfeldstärken, aus welchen sich die angedeutete Mittellage errechnen lässt. Die sich aufgrund des vom Geber 21 ausgestrahlten Magnetwechselfeldes am Mitnehmer 11 einstellenden Magnetfelder sind zur Veranschaulichung als Magnetfeldlinien schematisch angedeutet. In Fig. 3B ist aufgrund überhöhter Kettenspannung der Mitnehmer 11 nach oben gewandert. Mit den Magnetfeldlinien ist angedeutet, dass das vom Magnetwechselfeld 21 erzeugte Magnetfeld im Mitnehmer 11 bei im Prinzip gleicher Magnetfeldstärke nach oben gewandert ist, weswegen höherliegende Magnetfelddetektoren 23 den maximalen Ausschlag der Feldstärke detektieren, während die tieferliegenden Magnetfelddetektoren 23 eine erheblich geringere Magnetfeldstärke detektieren. Da ein moduliertes Magnetwechselfeld in die Mitnehmer 11 eingeleitet wird, detektieren selbstverständlich auch die Magnetfelddetektoren 23 ein entsprechend der Drehfrequenz des magnetischen Wechselfeldes erzeugtes moduliertes Magnetfeld. Aufgrund der ausreichend hohen Drehfrequenz des Magnetwechselfeldes wird gleichwohl während des Durchlaufs des Mitnehmers 11 eine ausreichende Anzahl an Amplitudenwechseln des Magnetwechselfeldes detektiert, um die aktuelle Lage des Mitnehmers 11 sicher und frei von Magnetisierungseinflüssen der Mitnehmer 11 ermitteln zu können. Fig. 3C zeigt den Zustand vor oder beim Auftreten von Hängekette. Der Mitnehmer 11 befindet sich in einer Lage am unteren Ende des Detektorfeldes 22, weswegen die am tiefsten liegenden Magnetfelddetektoren 23 die maximalen Amplitudenwechsel des in den Mitnehmer 11 durch den Geber 21 eingeleiteten Magnetwechselfeldes detektieren. Die jeweilige Verschiebung des Magnetfeldes ist auch durch die unterschiedlichen Lagen der Magnetfeldlinien des Magnetfeldes am Geber 21 angedeutet.

Es wird nun wieder auf Fig. 1 Bezug genommen. Die mit dem Detektorfeld 22 ermittelten Signale für die einzelnen Magnetfelddetektoren 23 werden an eine übergeordnete Steuereinheit 50 geliefert. Über die mit den Signalleitungen 25 in Fig. 1 angedeuteten Signalleitungen kann auch die aktuelle Drehzahl der Antriebsmotoren 2 bzw. 6 der Steuereinheit 50 zugeführt werden. Aus den über die Signalleitungen 25 zugeführten Messdaten des Detektorfeldes 22 sowie den aktuellen Drehzahlen der Antriebsmotoren 2, 6 kann die Auswerte- und Steuereinheit 50 Steuersignale generieren, die an die Hydrauliksteuerung 9 geliefert werden, um über die Signalleitung 8 ein Aus- oder Einfahren der hydraulischen Spanneinrichtung 7 zu bewirken und die Position des Kettenrades 5 am Hilfsantrieb 4 zum Wegspannen der Hängkette oder zum Minimieren der Kettenspannung bei zu straff gespannter Antriebskette 6 zu ändern. Die Regel- und Auswerteeinheit 50 kann parallel hierzu auch Ansteuersignale für die Antriebsmotoren 2, 6 ausgeben, um dem Auftreten von Hängekette oder zu starker Kettenspannung durch Änderung der jeweiligen Drehzahlen der Antriebsmotoren 2, 6 vorzubeugen.

Im Ausführungsbeispiel in Fig. 1 sind zwei weitere Sensoreinrichtungen 30 angedeutet, über die ggf. weitere Kettenzustände sowohl in der Antriebsstation 1 als auch in der Antriebsstation 4 erfasst werden können. Im Hauptantrieb 1 ist die weitere Sensoreinrichtung 30 dem Obertrum 6A im Zulauf vor dem Kettenrad 3 und an der den Hilfsantrieb bildenden Antriebsstation 4 ist die Sensoreinrichtung 30 dem auf das Kettenrad 5 zulaufenden Untertrum 6B angeordnet. Das Messprinzip der Sensoreinrichtung 30 im gezeigten Ausführungsbeispiel basiert wiederum auf der Einleitung eines modulierten Magnetfeldes (Magnetwechselfeldes) in die Mitnehmer und dem Abtasten des vom Mitnehmer beim Passieren des Magnetfeldes des Magnetwechselfeld-Erzeugers aufgenommenen modulierten Magnetfeldes mit einem Sensorfeld 32 mit mehreren Magnetfelddetektoren 33. Die Messsignale des Detektorfeldes 32 können der Auswerte- und Steuereinrichtung 50 wiederum über Signalleitungen 35 zugeführt werden.

Fig. 4 zeigt in einem schematischen Schaubild die Nutzung derselben Systemtechnik bei einer Hobelanlage 110 für den untertägigen Bergbau. Ein Gewinnungshobel 160 wird mittels eines im Prinzip endlosen Hobelkettenbandes 106, bestehend aus ineinanderfassenden vertikalen und horizontalen Kettengliedern (112, 113, Fig. 5), reversierend von einer Antriebsstation 101 zur anderen Antriebsstation 104, oder umgekehrt, hin- oder herbewegt, wie dies mit dem Doppelpfeil R in Fig. 4 angedeutet ist. Die Antriebsstation 101 weist nicht gezeigte Antriebsmotoren sowie ein Kettenrad 103 für die Hobelkette 106 und die Antriebsstation 104 weist ein Kettenrad 105 sowie eine Spanneinrichtung 107 auf. Je nach Bewegungsrichtung des Hobels 160 bildet der eine der beiden Antriebe einen Hauptantrieb und der andere den jeweiligen Hilfsantrieb. Die Hobelkette 106 bildet wiederum einen Obertrum 106A und einen Untertrum 106B, die je nach Laufrichtung R des Hobels 116 den Zug- oder Rücklauftrum bilden. Da Hängekette und/oder zu starke Kettenspannung sowohl im Zulauf als auch im Auslauf eines jeden Kettenrades 103 je nach Laufrichtung R des Hobelkörpers 160 auftreten können, sind bei der Hobelanlage 110 vier identische Sensoreinrichtungen 120 vorgesehen, die einerseits ein Detektorfeld 122 mit einer ausreichenden Anzahl von matrixartig angeordneten Magnetfelddetektoren 123 aufweisen und seitlich des Durchgangs für die Kette 106 angeordnet sind. Jedem Detektorfeld 122 ist jeweils ein in den Fig. 5A, 5B und 5C schematisch gezeigter Magnetwechselfeld-Erzeuger 121 zugeordnet, der dem Detektorfeld 122 gegenüberliegt und ebenfalls seitlich des Durchgangs 115 für das Antriebskettenband 106 angeordnet ist. Da bei der Hobelanlage 110 eine Veränderung des vorzugsweise in die horizontalen Kettenglieder 112 eingeleiteten Magnetwechselfeldes mit den Magnetfelddetektoren 123 im Detektorfeld 122 detektiert wird, ist der Abstand zwischen dem Erzeuger 121 und dem Detektorfeld 122 deutlich geringer als beim vorherigen Ausführungsbeispiel. Außerdem können der Erzeuger 121 und das Detektorfeld 122 alternativ zum Maschinenrahmen auch unmittelbar in Seitenwänden eines nicht dargestellten Hobelkastens, in welchem die Kettenräder 103 bzw. 105 gelagert sind, eingebaut sein, um in relativ geschützter Lage die Veränderung des modulierten Magnetfeldes zu detektieren. Ähnlich wie beim vorherigen Ausführungsbeispiel wird eine Verschiebung der Hobelkette 106 nach oben aufgrund einer Detektion der maximalen Amplitude des Magnetwechselfeldes mit höherliegenden Magnetfelddetektoren 123, wie in Fig. 5B angedeutet, beziehungsweise mit tiefer liegenden Magnetfelddetektoren 123, wie in Fig. 5C angedeutet, detektiert, je nach dem, ob sich aufgrund zu starker Kettenspannung die Kette nach oben oder bei Hängekette gegenüber einer Mittellage nach unten bewegt. Auch bei der Hobelanlage 110 ist eine Steuer- und Auswerteeinheit 150 vorgesehen, welcher zumindest sämtliche Messwerte der vier Detektorfelder 122 der Sensoreinrichtungen 120 zugeführt werden. Die Signalzuführung kann entweder über die Signalleitungen 125, über einen Systembus oder kabellos über Funk stattfinden, wie dies mit dem Funksender 126 und dem Funkempfänger 127 in Fig. 4 angedeutet ist. Es versteht sich, dass der Funkempfänger 127 auch für die bidirektionale Datenübertragung ausgelegt sein kann.

Um mit den magnetischen Sensoreinrichtungen gegebenenfalls auch Kettenverschleiß oder Mitnehmerverschleiß zu detektieren, und um mit hoher Sicherheit Hängekette zu erfassen, kann nach jedem Stillstand der Gewinnungsanlage eine Referenz- oder Kalibrierfahrt durchgeführt werden, in welcher für jedes Kettenglied oder jedes horizontale Kettenglied bei einer Hobelanlage oder für jeden Mitnehmer bei einer Förderanlage ein Referenzwert ermittelt wird. Im günstigsten Fall ist hierbei der Auswerte- und Regeleinrichtung bekannt, wie viele horizontale Kettenglieder bzw. Mitnehmer im System eingebaut sind. Durch Speicherung eines Referenzwertes für jeden Mitnehmer bzw. jedes Kettenglied kann, da sich das individuelle Magnetfeld jedes Mitnehmers und jedes horizontalen Kettengliedes mit zunehmendem Verschleiß ändert, aus einem Vergleich der Referenzwerte mit Referenzwerten vorheriger Kalibrierfahrten oder, bei längerer Betriebszeit, einem Vergleich der aktuellen Werte mit den Referenzwerten aus einer Änderung des übertragenen Magnetfeldes beim Passieren der Magnetwechselfeld-Geber der aktuelle Verschleiß ermittelt werden, um rechtzeitig ein Wartungsintervall einzuleiten, bevor ein Kettenabriss oder dgl. auftritt. Die bei der Gewinnungsanlage verwendete Sensoreinrichtung ist daher nicht auf die Anwendung zur Hängekettenerfassung beschränkt.

Die Ausführungsbeispiele zeigen schematisch die Anordnung von Magnetwechselfelderzeuger und Detektorfeld. Im Detektorfeld können auch erheblich mehr als nur neun oder zwölf Magnetfelddetektoren angeordnet werden, z.B. 16 oder 27 Magnetfelddetektoren, um die Auflösung des Systems zu erhöhen. Der zur Erzeugung des modulierten Magnetfeldes verwendete Magnet kann ein leistungsstarker Dauermagnet (Supermagnet) beispielsweise aus Neodym-Eisen-Bor (NdFeB) oder einem anderen geeigneten Material für Supermagneten mit ausreichend hoher Magnetfeldstärke von z.B. 1T sein, der mit einer Frequenz von z.B. bis zu 1.000 U/min angetrieben wird, um ein wechselndes Magnetfeld mit einer ausreichenden Anzahl am Amplitudenwechseln beim Durchlaufen der Mitnehmer oder Kettenglieder zu erzeugen. Der Drehwinkel kann hierbei als Referenzwert erfasst werden. Dem Geber können ggf. auch auf derselben Seite des Durchgangs Magnetfeldsensoren zugeordnet sein. Der mit dem Magnetwechselfeld in die Mitnehmer oder Kettenglieder eingeleitete Magnetisierungszustand unterscheidet sich deutlich vom Ausgangsmagnetisierungszustand der Mitnehmer oder Kettenglieder, so dass das dynamische, modulierte Magnetwechselfeld von der Ausgangsmagnetisierung des Mitnehmers beim Passieren eines Sensorfeldes sicher unterschieden werden kann. Das Sensorsystem sollte zumindest in zwei Richtungen, und vorzugsweise in allen drei Feldrichtungen messen und eine ausreichende Anzahl von Magnetfelddetektoren aufweisen.

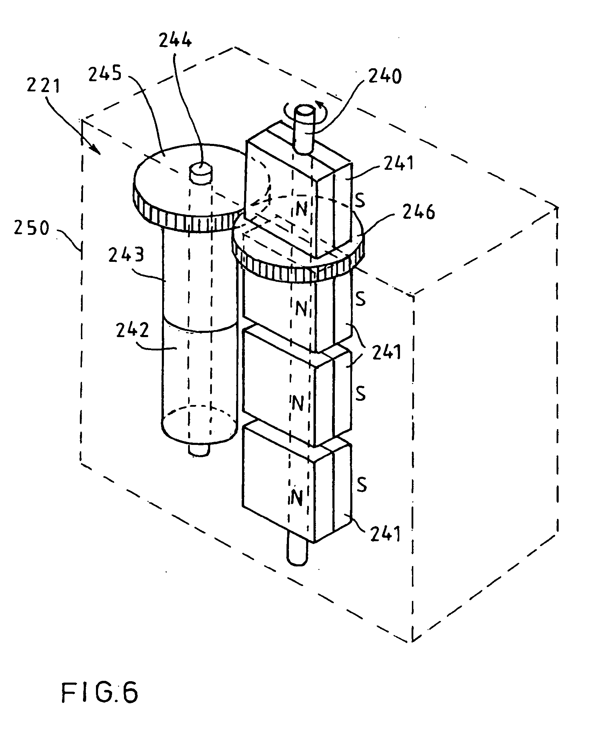

Fig. 6 zeigt schematisch ein Ausführungsbeispiel für einen Magnetwechselfeld-Erzeuger 221 als Geber für eine erfindungsgemäße Sensoreinrichtung. Der Magnetwechselfelderzeuger 221 weist ein vorzugsweise kastenförmiges, in einer Aufnahmevertiefung in den Seitenwangen z.B. eines Maschinenrahmens einsetzbares Gehäuse 250 auf, in welchem eine Drehwelle 240 gelagert ist, an der mehrere, übereinander angeordnete Blockmagnete 241 drehfest befestigt sind. Die Anordnung der hier aus Blockmagneten 241 bestehenden Permanentmagneten erfolgt vorzugsweise jeweils mit übereinstimmender Ausrichtung der Magnetisierung. Im gezeigten Ausführungsbeispiel liegen alle mit N gekennzeichneten Pole und alle mit S gekennzeichneten Pole der Blockmagnete 241 jeweils aufeinander ausgerichtet übereinander. Zum Antrieb der Drehwelle 240 und der mit dieser verbundenen Magneten 241 ist im Gehäuse ferner z.B. ein Hydraulikantrieb 242 angeordnet, der mit einem Getriebe 243 gekoppelt ist, auf dessen Ausgangswelle 244 ein Zahnrad 245 angeordnet ist, das mit einem wiederum drehfest mit der Drehwelle 240 verbundenen Zahnrad 246 kämmt. Der Hydraulikantrieb kann insbesondere aus einem Hydraulikmotor mit Stromregelventil (nicht gezeigt) zur Drehzahlverstellung bestehen. Bei einer Rotation der Drehwelle 240 entsteht über die gesamte Höhe des Magnetwechselfelderzeugers 221 ein dynamisches Magnetwechselfeld, welches in die Mitnehmer der Antriebskette eingeleitet und am gegenüberliegenden Ende der Mitnehmer mit der Sensoreinrichtung detektiert werden kann.

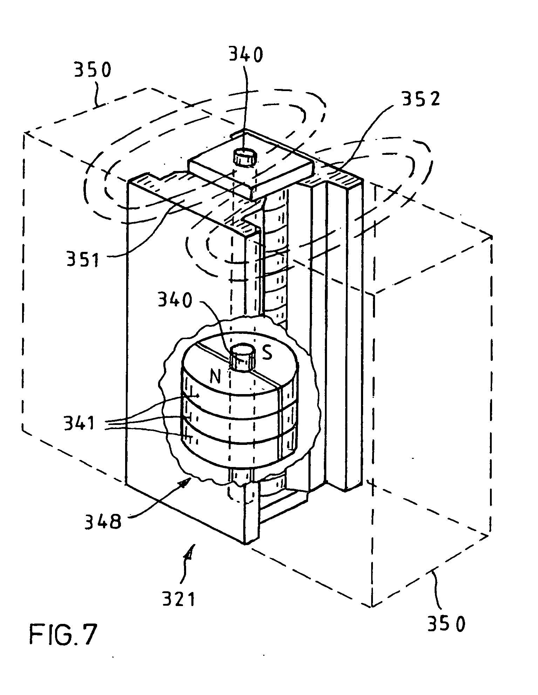

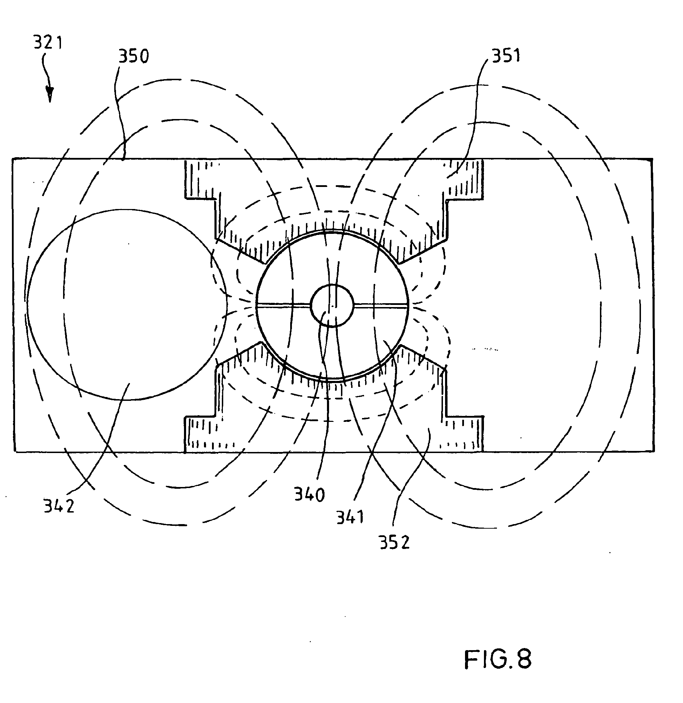

Die vorstehende Figurenbeschreibung erfolgte für eine Gewinnungsanlage mit einer Sensoreinrichtung, die einen Magnetwechselfelderzeuger als Geber für ein dynamisches Magnetfeld aufweist. Der Geber könnte auch ein statisches Magnetfeld erzeugen, das mit einem Detektorfeld in einer Gewinnungsanlage, wie oben beschrieben, abgetastet wird. Die Fig. 7 und 8 zeigen für einen solchen Magnetfeld-Erzeuger 321, mit dem ein statisches, jedoch variables Magnetfeld erzeugt werden kann, beispielhaft ein Ausführungsbeispiel. Innerhalb eines kastenförmigen Gehäuses 350 sind an den Längsseiten, von denen im Betriebseinsatz eine der Maschinenwange und die andere dem Durchgang in der Antriebsstation zugekehrt liegt, jeweils Polplatten 351, 352 aus vorzugsweise weichmagnetischem, magnetisierbaren Eisenmaterial angeordnet, zwischen denen ein Magnetpaket 348 aus hier mehreren, übereinander angeordneten, diametral magnetisierten Ringmagneten 341 angeordnet ist. Die Ringmagnete 341 sind derart angeordnet, dass alle mit N bezeichneten Pole sowie die Pole S jeweils näherungsweise ausgerichtet übereinanderliegen. Sämtliche Ringmagneten 341 sind an einer Magnetwelle 340 befestigt, die mittels eines in Fig. 8 schematisch angedeuteten und z.B. über Zahnräder mit ihr gekoppelten Drehantriebs 342 in ihrer Ausrichtung relativ zu den Polplatten 351, 352 verdreht werden können, um je nach Relativlage des Magnetpaketes 348 zu den Polplatten 351, 351 unterschiedlich starke Magnetfelder in diese und insofern auch in die vorbeilaufenden Mitnehmer oder Kettenglieder einzuleiten. Das Drehen der Magnetwelle findet vorzugsweise nur bei einem Kalibrierungsdurchlauf statt, wohingegen die Magnetwelle im laufenden Betrieb über den abgeschalteten Drehantrieb und das wirksame Untersetzungsverhältnis festgesetzt ist. Mit dem Magnetfelderzeuger 321 als Geber der Sensoreinrichtung kann ein statisches, nicht moduliertes Magnetfeld erzeugt werden, welches von der einen Seite des Maschinenrahmens in die Mitnehmer eingeleitet und an der anderen Seite des Maschinenrahmens mit dem Detektorfeld abgetastet wird. Durch Ändern der Ausrichtung des Magnetpaketes 348 relativ zum Durchgang bzw. zum Detektorfeld kann die Messung jeweils mit einem optimalen Magnetfeld vorgenommen werden.

Die Erfindung ist nicht auf die schematisch gezeigten Ausführungsbeispiele beschränkt. Zumindest eine der Antriebsstationen könnte auch eine antriebslose Umkehrstationen sein, mit deren Kettenrad die Antriebskette nur umgelenkt wird.

## Patentansprüche

1. Gewinnungsanlage, insbesondere für den Bergbau, mit einer ersten Antriebsstation und mit einer zweiten, vorzugsweise mittels einer Spanneinrichtung spannbaren Antriebsstation, mit in den Antriebsstationen (1, 4; 101, 104) gelagerten Kettenrädern (3, 5; 103, 105), mit einer Kettenglieder aufweisenden und mittels der Kettenräder bewegbaren Antriebskette (6; 106), die zwischen den Kettenrädern in einem Obertrum und einem Untertrum verläuft, und mit wenigstens einer magnetischen Sensoreinrichtung zur Erfassung zumindest eines Kettenzustandes der Antriebskette im Obertrum oder im Untertrum, **dadurch gekennzeichnet, dass** jede Sensoreinrichtung (20, 30; 120) einen von einem MagnetfeldErzeuger (21; 121) gebildeten Geber und ein mit mehreren Magnetfelddetektoren (23; 123) versehenes Detektorfeld (22; 122) als Detektor aufweist, wobei Detektor und Geber seitlich eines Durchgangs (15; 115) für den abzutastenden Trum der Antriebskette (6; 106) angeordnet sind.

2. Gewinnungsanlage nach Anspruch 1, **dadurch gekennzeichnet, dass** der Detektor (22; 122) und der Geber (21; 121) einander gegenüberliegen, wobei vorzugsweise sich das Detektorfeld (22; 122) über die Höhe des Durchgangs (15; 115) erstreckt.

3. Gewinnungsanlage nach Anspruch 1 oder 2, **dadurch gekennzeichnet, dass** das Detektorfeld (22; 122) mehrere nebeneinander angeordnete Magnetfelddetektoren (23) und mehrere übereinander angeordnete Magnetfelddetektoren (23) aufweist.

4. Gewinnungsanlage nach einem der Ansprüche 1 bis 3, **dadurch gekennzeichnet, dass** das Detektorfeld (22) und/oder der Erzeuger (21) für das Magnetfeld in den Seitenwangen (15; 14) eines Maschinenrahmens oder in den Seitenwänden eines Kettenradkastens der Antriebsstation angeordnet, insbesondere eingebaut ist.

5. Gewinnungsanlage nach einem der Ansprüche 1 bis 4, **dadurch gekennzeichnet, dass** der Geber von einem Magnetwechselfeld-Erzeuger (221) gebildet ist und vorzugsweise von rotierbaren oder rotierenden Magneten (240) gebildet ist, wobei weiter vorzugsweise der den Geber bildende Drehmagnet eine Magnetfeldstärke von wenigstens 0,5 T aufweist.

6. Gewinnungsanlage nach einem der Ansprüche 1 bis 4, **dadurch gekennzeichnet, dass** der Geber (221) einen hydraulischen Drehantrieb (243), insbesondere einen Hydraulikmotor mit Stromregelventil zur Drehzahlverstellung, aufweist, wobei vorzugsweise der den Geber bildende Drehmagnet eine Magnetfeldstärke von wenigstens 0,5 T aufweist.

7. Gewinnungsanlage nach einem der Ansprüche 1 bis 4, **dadurch gekennzeichnet, dass** der Geber ein statischer Magnetfeld-Erzeuger ist.

8. Gewinnungsanlage nach einem der Ansprüche 1 bis 7, **dadurch gekennzeichnet, dass** der das Magnetfeld oder Magnetwechselfeld erzeugende Magnet im Geber ein Dauermagnet, insbesondere Supermagnet, ist.

9. Gewinnungsanlage nach einem der Ansprüche 1 bis 8, **dadurch gekennzeichnet, dass** der Magnet/die Magnete des Gebers eine Magnetanordnung bilden, deren Lage und/oder Ausrichtung relativ zum Magnetfeldsensor veränderbar ist.

10. Gewinnungsanlage nach einem der Ansprüche 1 bis 4 oder 7 bis 9, **dadurch gekennzeichnet, dass** der Geber eine Magnetanordnung mit mehreren konzentrisch um eine Mittelachse angeordneten Ringmagneten aufweist, wobei die Ringanordnung mittels eines Stellantriebs um die Mittelachse verdrehbar ist und vorzugsweise in unterschiedlichen Verdrehlagen mittels des Stellantriebs positionierbar ist.

11. Gewinnungsanlage nach einem der Ansprüche 1 bis 10, **dadurch gekennzeichnet, dass** die Gewinnungsanlage als Förderer (10) mit Mitnehmern (11) in der Antriebskette (6) ausgebildet ist und jede Antriebsstation wenigstens eine Sensoreinrichtung aufweist, die in Kettenlaufrichtung jeweils dem Trum hinter dem Kettenrad zugeordnet ist, oder dass die Gewinnungsanlage (110) mit einer reversierend bewegbaren Antriebskette (106) versehen ist und jede Antriebsstation (101, 104) zwei Sensoreinrichtungen (120) aufweist, wobei in jeder Antriebsstation eine Sensoreinrichtung (120) dem Obertrum und eine Sensoreinrichtung (120) dem Untertrum zugeordnet ist.

12. Gewinnungsanlage nach einem der Ansprüche 1 bis 11, **dadurch gekennzeichnet, dass** dem Geber auf derselben Seite des Durchgangs Magnetfeldsensoren zur Erfassung des vom Geber erzeugten realen Magnetfeldes als Referenzgröße zugeordnet sind.

13. Verfahren zum Ansteuern einer Gewinnungsanlage insbesondere für den Bergbau, mit einer ersten Antriebsstation (1, 4) und mit einer zweiten, vorzugsweise mittels einer Spanneinrichtung spannbaren Antriebsstation (4), mit in den Antriebsstationen gelagerten Kettenrädern (3, 5), mit einer Kettenglieder aufweisenden und mittels der Kettenräder bewegbaren Antriebskette (6), die zwischen den Kettenrädern in einem Obertrum und einem Untertrum verläuft, mit wenigstens einer magnetischen Sensoreinrichtung zur Erfassung zumindest eines Kettenzustands der Antriebskette im Obertrum oder im Untertrum, und mit einer Auswerte- und Steuereinrichtung (50; 150), der die Signale der magnetischen Sensoreinrichtung zugeführt werden und mit welcher der Ausfahrzustand der Spanneinrichtung (7; 107) oder die Antriebe der Antriebsstationen ansteuerbar sind, **dadurch gekennzeichnet, dass** jede Sensoreinrichtung (120) ein Magnetfeld erzeugt, das mittels mehrerer Magnetfelddetektoren (23; 123) eines Detektorfeldes (22; 122) abgetastet wird, wobei der abzutastende Trum der Antriebskette zwischen dem Magnetfeld-Erzeuger und dem Detektorfeld (22; 122), die seitlich eines Durchgangs (15; 115) für den abzutastenden Trum angeordnet sind, hindurchgeführt wird und aus einer Veränderung der Lage des im Detektorfeld erfassten Magnetfeldes der Kettenzustand der Antriebskette ermittelt wird.

14. Verfahren nach Anspruch 13, **dadurch gekennzeichnet, dass** jeder Magnetfelddetektor (23) des Detektorfeldes das vom Geber abgegebene und durch die Antriebskette übertragene Magnetfeld abtastet und aus der Position des oder der die maximale Magnetfeldstärke ermittelnden Magnetfelddetektoren der Kettenzustand ermittelt wird.

15. Verfahren nach Anspruch 13 oder 14, **dadurch gekennzeichnet, dass** der Geber ein Magnetwechselfeld erzeugt, wobei vorzugsweise mit dem Geber zugeordneten Magnetfeldsensoren das reale, vom Geber erzeugte Magnetwechselfeld erfasst und als Referenzwert der Auswerteeinheit zugeführt wird und/oder der Drehwinkel eines Drehantriebs für den Geber erfasst und als Referenzwert der Auswerteeinheit zugeführt wird.

16. Verfahren nach einem der Ansprüche 13 oder 14, **dadurch gekennzeichnet, dass** der Geber Ringmagnete aufweist, die konzentrisch zu einer Mittelachse angeordnet sind und eine Ringanordnung bilden, die zur Erzeugung eines variablen Magnetfeldes verdreht wird.

17. Verfahren nach einem der Ansprüche 13 bis 16, **dadurch gekennzeichnet, dass** in der Auswerte- und Steuereinheit die Kennzahlen von Antriebsmotoren der Antriebsstationen, insbesondere die Drehzahlen, erfasst werden und in Abhängigkeit von dem ermittelten Kettenzustand eine Drehzahlregelung eingeleitet wird.

18. Verfahren nach einem der Ansprüche 13 bis 17, **dadurch gekennzeichnet, dass** nach jedem Stillstand der Antriebskette ein Kalibrierdurchgang stattfindet, in welchem für jedes Kettenglied oder für jeden Mitnehmer ein Referenzwert für die Grundmagnetisierung ermittelt wird, der im Betrieb mit dem aktuellen, mittels des Detektorfeldes detektierten Wert verglichen wird.

## Claims

1. An extraction device, particularly for mining, having a first drive station and a second drive station which is preferably capable of being tensioned by a tensioning means, having sprockets (3, 5; 103, 105) which are mounted in the drive stations (1, 4; 101, 104), having a drive chain (6; 106) which includes chain links being movable by means of the sprockets and extends between the sprockets in the form of an upper run and a lower run, and at least one magnetic sensor unit for detecting at least one chain condition of the drive chain in the upper run or the lower run, **characterized in that** each sensor unit (20, 30; 120) includes a transmitter, which is formed by a magnetic field generator (21; 121), and a detector field (22; 122), which is provided with a plurality of magnetic field detectors (23; 123), as a detector, wherein the detector and the transmitter are arranged to the side of a passage (15; 115) for the run of the drive chain (6; 106) that is to be scanned.

2. The extraction device as claimed in claim 1, **characterized in that** the detector (22; 122) and transmitter (21; 121) are arranged opposite one another, wherein the detector field (22; 122) preferably extends over the height of the passage (15; 115).

3. The extraction device as claimed in claim 1 or 2, **characterized in that** the detector field (22; 122) includes a plurality of magnetic field detectors (23) that are arranged next to one another and a plurality of magnetic field detectors (23) that are arranged above one another.

4. The extraction device as claimed in one of claims 1 to 3, **characterized in that** the detector field (22) and/or the generator (21) for the magnetic field is arranged, in particular incorporated, in the side panels (15; 14) of a machine frame or the side walls of a sprocket casing of the drive station.

5. The extraction device as claimed in one of claims 1' to 4, **characterized in that** the transmitter is formed by an alternating magnetic field generator (221) and is preferably formed by rotary or rotating magnets (240), wherein preferably the rotary magnet forming the transmitter has a magnetic field strength of at least 0.5 T.

6. The extraction device as claimed in one of claims 1 to 4, **characterized in that** the transmitter (221) includes a hydraulic rotary drive (243), in particular a hydraulic motor with a current-regulating valve for adjusting the speed of rotation, ), wherein preferably the rotary magnet forming the transmitter has a magnetic field strength of at least 0.5 T.

7. The extraction device as claimed in one of claims 1 to 4, **characterized in that** the transmitter is a static magnetic field generator.

8. The extraction device as claimed in one of claims 1 to 7, **characterized in that** the magnet that generates the magnetic field or alternating magnetic field is a permanent magnet, in particular a supermagnet.

9. The extraction device as claimed in one of claims 1 to 8, **characterized in that** the magnet or magnets of the transmitter form a magnet arrangement whereof the position and/or alignment in relation to the magnetic field sensor is variable.

10. The extraction device as claimed in one of claims 1 to 4 or 7 to 9, **characterized in that** the transmitter includes a magnet arrangement having a plurality of ring magnets which are arranged concentrically around a central axis, wherein the annular arrangement may be turned about the central axis by means of an actuator and may preferably be positioned in different turned positions by means of the actuator.

11. The extraction device as claimed in one of claims 1 to 10, **characterized in that** the extraction device takes the form of a conveyor (10) with entrainers (11) in the drive chain (6), and each drive station includes at least one sensor unit, which is associated with the run that is downstream of the sprocket in the respective direction of movement of the chain, or that the extraction device (110) is provided with a reversible drive chain (106), and each drive station (101, 104) includes two sensor units (120), wherein in each drive station one sensor unit (120) is associated with the upper run and one sensor unit (120) is associated with the lower run.

12. The extraction device as claimed in one of claims 1 to 11, **characterized in that** magnetic field sensors are associated with the transmitter on the same side of the passage, for detecting the actual magnetic field that is generated by the transmitter, as a reference variable.

13. A method for controlling an extraction device particularly for mining, having a first drive station (1, 4) and a second drive station (4) which is preferably capable of being tensioned by a tensioning means, having sprockets (3, 5) which are mounted in the drive stations, having a drive chain (6) which includes chain links, may be moved by means of the sprockets and extends between the sprockets in the form of an upper run and a lower run, having at least one magnetic sensor unit for detecting at least one chain condition of the drive chain in the upper run and the lower run, and having an evaluation and control device (50; 150) to which the signals from the magnetic sensor unit are supplied and by means of which the extension condition of the tensioning means (7; 107) or the drives of the drive stations may be controlled, **characterized in that** each sensor unit (120) generates a magnetic field that is scanned by means of a detector field (22; 122) formed by a plurality of magnetic field detectors (23; 123), wherein the run of the drive chain that is to be scanned is guided between the magnetic field generator and the detector field (22; 122), which are arranged to the side of a passage (15; 115) for the run that is to be scanned, and the chain condition of the drive chain is determined from a change in the position of the magnetic field detected in the detector field.

14. The method as claimed in claim 13, **characterized in that** each magnetic field detector (23) of the detector field scans the magnetic field that is emitted by the transmitter and transmitted by the drive chain, and the chain condition is determined from the position of the magnetic field detector or detectors that determine the greatest magnetic field strength.

15. The method as claimed in claim 13 or 14, **characterized in that** the transmitter generates an alternating magnetic field, wherein preferably magnetic field sensors that are associated with the transmitter are used to detect the actual alternating magnetic field that is generated by the transmitter and supply it to the evaluation unit as a reference value, and/or the rotational position of a rotary drive is detected for the transmitter and is supplied to the evaluation unit as a reference value.

16. The method as claimed in one of claims 13 or 16, **characterized in that** the transmitter includes ring magnets which are arranged concentrically relative to a central axis and form an annular arrangement which is turned in order to generate a variable magnetic field.

17. The method as claimed in one of claims 13 to 16, **characterized in that** the characteristics of drive motors of the drive stations, in particular the speeds of rotation, are detected in the evaluation and control unit, and regulation of the speed is performed as a function of the determined chain condition.

18. The method as claimed in one of claims 13 to 17, **characterized in that** every time the drive chain comes to a standstill a calibration is performed in which for each chain link or entrainer a reference value for the basic magnetization is determined and, during operation, is compared with the present value that is detected by means of the detector field.

## Revendications

1. Installation d'extraction, en particulier pour la mine, présentant
un premier poste d'entraînement et un deuxième poste d'entraînement qui peut être tendu au moyen d'un dispositif de tension,
des pignons à chaîne (3, 5; 103, 105) montés dans les postes d'entraînement (1, 4; 101, 104),
une chaîne d'entraînement (6; 106) qui présente des maillons de chaîne et qui peut être déplacée au moyen du pignon de chaîne en s'étendant sur un brin supérieur et un brin inférieur entre les pignons de chaîne et
au moins un dispositif magnétique de détection qui détecte au moins un état de la chaîne d'entraînement dans le brin supérieur ou le brin inférieur, **caractérisée en ce que**
chaque dispositif de détection (20, 30; 120) présente un émetteur formé d'un générateur (21; 121) de champ magnétique et comme détecteur une batterie (22; 122) de détecteurs dotée de plusieurs détecteurs (23; 123) de champ magnétique, le détecteur et l'émetteur étant disposés sur les côtés d'un passage (15; 115) prévu pour le brin de la chaîne d'entraînement (6; 106) qui doit être testé.

2. Installation d'extraction selon la revendication 1, **caractérisée en ce que** le détecteur (22; 122) et l'émetteur (21; 121) se font mutuellement face, la batterie (22; 122) de détecteurs s'étendant de préférence sur la hauteur du passage (15; 115).

3. Installation d'extraction selon les revendications 1 ou 2, **caractérisée en ce que** la batterie (22; 122) de détecteurs présente plusieurs détecteurs (23) de champ magnétique disposés les uns à côté des autres et plusieurs détecteurs (23) de champ magnétique disposés les uns au-dessus des autres.

4. Installation d'extraction selon l'une des revendications 1 à 3, **caractérisée en ce que** la batterie (22) de détecteurs et/ou le générateur (21) de champ magnétique sont disposés et en particulier montés dans les joues latérales (15; 14) d'un bâti de machine ou dans les parois latérales d'un caisson de pignon de chaîne du poste d'entraînement.

5. Installation d'extraction selon l'une des revendications 1 à 4, **caractérisée en ce que** l'émetteur est formé d'un générateur (221) de champ magnétique alternatif et est formé de préférence d'aimants (240) rotatifs ou tournants, l'aimant tournant qui forme l'émetteur présentant en outre une intensité de champ magnétique d'au moins 0,5 T.

6. Installation d'extraction selon la revendication 4, **caractérisée en ce que** l'émetteur (221) présente un entraînement hydraulique de rotation (243), en particulier un moteur hydraulique doté d'une soupape de régulation de courant qui permet d'ajuster la vitesse de rotation, l'aimant tournant formant l'émetteur présentant de préférence une intensité de champ magnétique d'au moins 0,5 T.

7. Installation d'extraction selon l'une des revendications 1 à 4, **caractérisée en ce que** l'émetteur est un générateur statique de champ magnétique.

8. Installation d'extraction selon l'une des revendications 1 à 7, **caractérisée en ce que** l'aimant qui génère le champ magnétique ou le champ magnétique alternatif dans l'émetteur est un aimant permanent et en particulier un superaimant.

9. Installation d'extraction selon l'une des revendications 1 à 8, **caractérisée en ce que** le ou les aimants de l'émetteur forment un système d'aimants dont la position et/ou l'orientation par rapport au détecteur de champ magnétique peut être modifiée.

10. Installation d'extraction selon l'une des revendications 1 à 4 ou 7 à 9, **caractérisée en ce que** l'émetteur présente un système d'aimants qui présente plusieurs aimants annulaires disposés concentriquement autour d'un axe central, le système annulaire pouvant tourner autour de l'axe central au moyen d'un entraînement d'ajustement et pouvant être positionné de préférence en plusieurs positions de rotation au moyen de l'entraînement d'ajustement.

11. Installation d'extraction selon l'une des revendications 1 à 10, **caractérisée en ce que** l'installation d'extraction est configurée comme transporteur (10) doté d'entraîneurs (11) prévus dans la chaîne d'entraînement (6) et **en ce que** chaque poste d'entraînement présente au moins un dispositif de détection associé au brin situé en aval du pignon de chaîne dans la direction de déplacement de la chaîne ou en ce que l'installation d'extraction (110) est dotée d'une chaîne d'entraînement (106) apte à se déplacer dans les deux sens, chaque poste d'entraînement (101, 104) présentant deux dispositifs de détection (120), un dispositif de détection (120) étant associé au brin supérieur et un dispositif de détection (120) au brin inférieur dans chaque poste d'entraînement.

12. Installation d'extraction selon l'une des revendications 1 à 11, **caractérisée en ce que** des détecteurs de champ magnétique sont associés à l'émetteur sur le même côté du passage, pour détecter comme grandeur de référence le champ magnétique réellement produit par l'émetteur.

13. Procédé de commande d'une installation d'extraction, en particulier pour la mine, présentant
un premier poste d'entraînement (1, 4) et un deuxième poste d'entraînement (4) qui peut de préférence être tendu au moyen d'un dispositif de tension,
des pignons à chaîne (3, 5) montés dans les postes d'entraînement,
une chaîne d'entraînement (6) qui présente des maillons de chaîne et qui peut être déplacée au moyen des pignons de chaîne en s'étendant sur un brin supérieur et un brin inférieur entre les pignons de chaîne,
au moins un dispositif magnétique de détection qui détecte au moins un état de la chaîne d'entraînement dans le brin supérieur ou le brin inférieur et
un dispositif d'évaluation et de commande (50; 150) auquel les signaux du dispositif de détection magnétique sont apportés et par lequel l'état de déploiement du dispositif de serrage (7; 107) ou des entraînements des postes d'entraînement peut être commandé,
**caractérisé en ce que**
chaque dispositif de détection (120) produit un champ magnétique qui est détecté au moyen de plusieurs détecteurs (23; 123) de champ magnétique d'une batterie (22; 122) de détecteurs,
**en ce que** le brin à tester de la chaîne d'entraînement passe entre le générateur de champ magnétique et la batterie (22; 122) de détecteurs disposés sur les côtés d'un passage (15; 115) prévus pour le brin à tester et
**en ce que** l'état de la chaîne d'entraînement est déterminé à partir d'une modification de la position du champ magnétique détecté dans la batterie de détecteurs.

14. Procédé selon la revendication 13, **caractérisé en ce que** chaque détecteur (23) de champ magnétique de la batterie de détecteurs détecte le champ magnétique délivré par l'émetteur et transmis par l'intermédiaire de la chaîne d'entraînement et **en ce que** l'état de la chaîne est déterminé à partir de la position du ou des détecteurs de champ magnétique qui détectent l'intensité maximale du champ magnétique.

15. Procédé selon les revendications 13 ou 14, **caractérisé en ce que** l'émetteur produit un champ magnétique alternatif, le champ magnétique alternatif réel produit par l'émetteur étant de préférence détecté à l'aide des détecteurs de champ magnétique associés à l'émetteur et apporté en tant que valeur de référence à l'unité d'évaluation et/ou **en ce que** l'angle de rotation d'un entraînement de rotation de l'émetteur est détecté et est amené en tant que valeur de référence à l'unité d'évaluation.

16. Procédé selon l'une des revendications 13 ou 14, **caractérisé en ce que** l'émetteur présente des aimants magnétiques disposés concentriquement autour d'un axe central et formant un système annulaire qui est mis en rotation pour produire un champ magnétique variable.

17. Procédé selon l'une des revendications 13 à 16, **caractérisé en ce que** les valeurs caractéristiques de moteurs d'entraînement des postes d'entraînement et en particulier leur vitesse de rotation sont détectées dans l'unité d'évaluation et de commande et **en ce qu'**une régulation de la vitesse de rotation est réalisée en fonction de l'état déterminé de la chaîne.

18. Procédé selon l'une des revendications 13 à 17, **caractérisé en ce qu'**après chaque arrêt de la chaîne d'entraînement a lieu une opération d'étalonnage dans laquelle une valeur de référence de la magnétisation de base est déterminée pour chaque maillon de chaîne ou pour chaque entraîneur et est comparée en fonctionnement avec la valeur effectivement détectée au moyen de la batterie de détecteurs.
